# EUROPEAN PATENT APPLICATION

(11) **EP 4 650 956 A1**
(43) Date of publication of application: **19.11.2025**
(21) Application number: 24762932.2
(22) Date of filing: 29.01.2024
(51) Int. Cl.: G06F 9/451

(54) **ELECTRONIC DEVICE DISPLAY METHOD, ELECTRONIC DEVICE, AND STORAGE MEDIUM**

(30) Priority: 27.02.2023 CN 202310206884
(71) Applicant: Huawei Technologies Co., Ltd., Shenzhen, Guangdong 518129 (CN)
(72) Inventor: WANG, Yan, Shenzhen, Guangdong 518129 (CN); YANG, Jianye, Shenzhen, Guangdong 518129 (CN); SU, Hongkai, Shenzhen, Guangdong 518129 (CN)
(74) Representative: Gill Jennings & Every LLP
(86) International application number: PCT/CN2024/074422
(87) International publication number: WO 2024/179249

(57) **Abstract**

This application provides a display method for an electronic device, an electronic device, and a storage medium. The method is applied to the electronic device having a display. In the method, when a first application is started, a preset scene defined by a system is obtained, where the preset scene corresponds to a target transition animation; if a starting scene of the first application matches the preset scene, the target transition animation is used in a process of switching between any two components in the first application; a second application is started from the first application; and if a starting scene of the second application matches the preset scene, the target transition animation is used in a process of switching from the first application to the second application. A third application is started from the first application; and if a starting scene of the third application matches the preset scene, the target transition animation is used during switching from the first application to the third application, to ensure consistency of animation effects for inter-application window switching in a same preset scene and consistency of animation effects for intra-application component switching.

## Description

### CROSS-REFERENCE TO RELATED APPLICATIONS

This application claims priority to Chinese Patent Application No. 202310206884.5, filed with the China National Intellectual Property Administration on February 27, 2023 and entitled "DISPLAY METHOD FOR ELECTRONIC DEVICE, ELECTRONIC DEVICE, AND STORAGE MEDIUM", which is incorporated herein by reference in its entirety.

### TECHNICAL FIELD

The present invention relates to the field of electronic technologies, and in particular, to a display method for an electronic device, an electronic device, and a storage medium.

### BACKGROUND

The current system provides a plurality of animation capabilities, including a system default animation during window switching, a system default animation during component switching, and a user-customized animation during component switching. The user-customized animation may overwrite the system default animation. In addition, the system provides a transparent theme capability for application components. After a transparent theme is set for an application, the window switching animation on the system side enters a special processing scene corresponding to the transparent theme. To be specific, the animation is not played during window switching.

To ensure consistent effects of a same application on different devices, customized animations are used in most scenes. However, the system default animation covers a relatively small quantity of scenes. In this case, in continuous operation scenes between different applications, transition animations are displayed as customized animations of different applications, resulting in a problem that transition animations are inconsistent. In addition, application of a system mechanism of the transparent theme to any scene also causes a problem that animations of switching between applications and components are broken, discontinuous, and inconsistent.

The priority of an application customized animation is high, and the application customized animation can overwrite the default animation effect defined by the system. To ensure consistency of animations of inter-application switching and intra-application switching in a scene, a plurality of applications need to comply with unified design specifications, and abandon the capability of using the theme style and customized animations. However, visual effects that need to be achieved by using the theme style exist in the applications. As a result, there is a trade-off between the two. A large amount of development work is caused or the design of consistent animation effects has to be abandoned. In addition, development of consistency of animation effects completed by an application 1 and an application 2 in a scene A cannot meet consistency of animation effects completed by the application 1 and an application 3 in the scene A.

### SUMMARY

Embodiments of this application provide a display method for an electronic device, an electronic device, and a storage medium, applied to an electronic device having a display, to resolve a problem of consistency of animation effects during transition between different applications.

According to a first aspect, an embodiment of this application provides a display method for an electronic device. The method is applied to an electronic device having a display and includes: when a first application is started, obtaining a preset scene defined by a system, where the preset scene corresponds to a target transition animation; if a starting scene of the first application matches the preset scene, using the target transition animation in a process of switching between any two components in the first application; receiving a first instruction, where the first instruction indicates to start a second application from the first application; starting the second application according to the first instruction; if it is determined that a starting scene of the second application matches the preset scene, using the target transition animation in a process of switching from the first application to the second application; receiving a second instruction, where the second instruction indicates to start a third application from the first application; starting the third application according to the second instruction; and if it is determined that a starting scene of the third application matches the preset scene, using the target transition animation in a process of switching from the first application to the third application.

In this method, in a same preset scene, a target transition animation corresponding to the preset scene may be used for switching between any two applications. For example, if switching from the first application to the second application and switching from the first application to the third application belong to a same preset scene A, a target transition animation 1 corresponding to the preset scene A is used for switching from the first application to the second application, and the target transition animation 1 corresponding to the preset scene is also used for switching from the first application to the third application. In this way, consistency of animation effects during transition between different applications can be ensured. In addition, the target transition animation 1 is also used for intra-application component switching, so that consistency of animation effects during transition between different components within an application in a same preset scene can be ensured.

In a possible design, after starting the second application, the method may further include: if it is determined that the starting scene of the second application matches the preset scene, using the target transition animation in a process of switching between any two components in the second application; and/or if it is determined that the starting scene of the third application matches the preset scene, using the target transition animation in a process of switching between any two components in the third application. In this way, consistency of animation effects for intra-application component switching in a same preset scene can be ensured.

In a possible design, the method may further include: if the starting scene of the first application matches the preset scene, disabling a system default component switching animation and a customized component switching animation that corresponds to the first application; if it is determined that the starting scene of the second application matches the preset scene, disabling a customized component switching animation corresponding to the second application; or if it is determined that the starting scene of the third application matches the preset scene, disabling a customized component switching animation corresponding to the third application. In this way, the target transition animation can be selected when switching is performed between components in an application in a same preset scene, to ensure consistency of animation effects for intra-application component switching in the same preset scene.

In a possible design, after starting the second application, the method may further include: receiving a third instruction for exiting the second application; exiting the second application according to the third instruction; restoring the system default component switching animation and the customized component switching animation that corresponds to the second application; starting the second application; and using the system default component switching animation or the customized component switching animation that corresponds to the second application in the process of switching between any two components in the second application. In this way, for an application that exits the preset scene, when switching is performed on internal components of the application, the system default component switching animation or the customized component switching animation that corresponds to the second application may be selected.

In a possible design, after the system default component switching animation and the customized component switching animation that corresponds to the second application are restored, a fourth application is started after the second application is started; and a system default window switching animation is used in a process of switching from the second application to the fourth application. In this way, when inter-application switching is performed on an application that exits the preset scene, the system default window switching animation may be selected.

In a possible design, the method may further include: if the starting scene of the first application does not match the preset scene, using the system default component switching animation or the customized component switching animation that corresponds to the first application in the process of switching between any two components in the first application. In this way, when the starting scene of the first application does not match the preset scene, an existing switching animation is still maintained. To be specific, the system default component switching animation or the customized component switching animation that corresponds to the first application is used.

In a possible design, the method may further include: if it is determined that the starting scene of the second application does not match the preset scene, using the system default window switching animation in the process of switching from the first application to the second application, and/or using the system default component switching animation or the customized component switching animation that corresponds to the second application in the process of switching between any two components in the second application; or if it is determined that the starting scene of the third application does not match the preset scene, using the system default window switching animation in the process of switching from the first application to the third application, and/or, using the system default component switching animation or the customized component switching animation that corresponds to the third application in the process of switching between any two components in the third application. In this way, when the starting scene of the second application or the third application does not match the preset scene, an existing switching animation is still maintained. To be specific, the system default component switching animation or the customized component switching animation that corresponds to the first application is used.

According to a second aspect, an embodiment of this application further provides an apparatus. The apparatus includes modules/units that perform the method in any possible design in any one of the foregoing aspects. These modules/units may be implemented by hardware, or may be implemented by executing corresponding software by hardware.

According to a third aspect, an embodiment of this application provides an electronic device, including a processor, a memory, and a display. The display is configured to display a user interface; and the memory is configured to store one or more computer programs, and when the computer program is executed by the processor, the electronic device is enabled to perform the method in the first aspect and any possible design of the first aspect.

According to a fourth aspect, an embodiment of this application further provides a computer-readable storage medium. The computer-readable storage medium includes a computer program, and when the computer program is run on an electronic device, the electronic device is enabled to perform the method in the first aspect and any possible design of the first aspect.

According to a fifth aspect, an embodiment of this application further provides a computer program product. When the computer program product is run on a terminal, the electronic device is enabled to perform the method in the first aspect and any possible design of the first aspect.

For beneficial effects of the second aspect to the fifth aspect, refer to beneficial effects of the first aspect. Details are not described again.

### BRIEF DESCRIPTION OF DRAWINGS

FIG. 1 is diagram of a hardware structure of a mobile phone according to an embodiment of this application;
FIG. 2 is a diagram of a software structure of a mobile phone according to an embodiment of this application;
FIG. 3 is a schematic flowchart of a display method for an electronic device according to an embodiment of this application;
FIG. 4 is a diagram of a scenario according to an embodiment of this application;
FIG. 5 is a diagram of a target transition animation corresponding to a preset scene according to an embodiment of this application;
FIG. 6 is a diagram of a transition animation according to an embodiment of this application;
FIG. 7(a), FIG. 7(b), FIG. 7(c), FIG. 7(d), and FIG. 7(e) are a group of diagrams of user interfaces for intra-application component switching according to an embodiment of this application;
FIG. 8(a) and FIG. 8(b) are a group of diagrams of user interfaces for inter-application window switching according to an embodiment of this application;
FIG. 9A and FIG. 9B are a diagram of a processing procedure of each service module in a system architecture during scene matching according to an embodiment of this application;
FIG. 10A and FIG. 10B are a diagram of a processing procedure of each service module in a system architecture during scene mismatching according to an embodiment of this application; and
FIG. 11 is a diagram of a hardware structure of an electronic device according to an embodiment of this application.

### DESCRIPTION OF EMBODIMENTS

The following clearly and completely describes the technical solutions in embodiments of this application with reference to the accompanying drawings in embodiments of this application. Terms used in the following embodiments are merely intended to describe specific embodiments, but are not intended to limit this application. The terms "one", "a", "the" and "this" of singular forms used in this specification and the appended claims of this application are also intended to include expressions such as "one or more", unless otherwise specified in the context clearly. It should be further understood that, in embodiments of this application, "one or more" means one, two, or more than two; and "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily refer to a same embodiment, but mean "one or more but not all embodiments", unless otherwise specifically emphasized in another manner. The terms "include", "have", and their variants all mean "include but are not limited to", unless otherwise specifically emphasized in another manner.

"A plurality of" in embodiments of this application means "greater than or equal to two". It should be noted that, in descriptions of embodiments of this application, terms such as "first" and "second" are used only for purposes of distinguishing descriptions, and cannot be understood as indicating or implying relative importance, or as indicating or implying a sequence.

This application provides a display method for an electronic device, an electronic device, and a storage medium, to resolve a problem of consistency of animation effects during transition between different applications. The method and the electronic device are based on a same technical concept. Because the method and the electronic device have similar principles for resolving the problem, reference may be mutually made to implementations of the electronic device and the method, and repeated parts are not described again.

In the solutions provided in embodiments of this application, a preset scene is defined. When it is determined that a starting scene of a first application matches the preset scene defined by a system, a target transition animation corresponding to the preset scene is used in a process of switching between components in the first application. When a second application is started from the first application, and when it is determined that a starting scene of the second application matches the preset scene defined by the system, the target transition animation is used in a process of switching from the first application to the second application. In the defined preset scene, the target transition animation defined in the preset scene is used for intra-application component switching and inter-application window switching, so that consistency of animation effects during transition between different applications can be ensured.

The following explains and describes some terms in this application, to facilitate understanding of a person skilled in the art.
(1) An electronic device is a device that is configured with a display and that can perform human-computer interaction by using the display. For example, the electronic device may be a mobile phone, a tablet computer, a notebook computer, a netbook, an in-vehicle device, a business intelligent terminal (including a video phone, a conference desktop intelligent terminal, and the like), a personal digital assistant (personal digital assistant, PDA), an augmented reality (augmented reality, AR)/virtual reality (virtual reality, VR) device, or the like. The electronic device includes a component (for example, a processor, an application processor, an image processor, or another processor) that can implement a data processing function and a component (for example, a display) that can display a user interface. An example embodiment of the electronic device includes but is not limited to a device provided with iOS^{®}, Android^{®}, Microsoft^{®}, or another operating system. The electronic device may alternatively be another portable device, for example, a laptop (laptop) with a touch-sensitive surface (for example, a touch panel). It should be further understood that in some other embodiments of this application, the electronic device may alternatively be a desktop computer with a touch-sensitive surface (for example, a touch panel), instead of a portable electronic device. A specific form of the electronic device is not limited in embodiments of this application.
(2) An interface, namely, a user interface (user interface, UI), is a medium interface that is for interaction and information exchange between an application or operating system in an electronic device and a user and that is presented on a display, and implements conversion between an internal form of information and a form acceptable to the user. The user interface is usually represented in a form of a graphical user interface (graphical user interface, GUI), and is a user interface that is related to a computer operation and that is displayed in a graphic manner. The graphical user interface may be an interface element such as an icon, a window, or a control that is displayed on the display of the electronic device. The control may include visible interface elements such as an icon, a button, a menu, a tab, a text box, a dialog box, a status bar, a navigation bar, and a Widget.

A structure of the electronic device is further described with reference to the accompanying drawings.

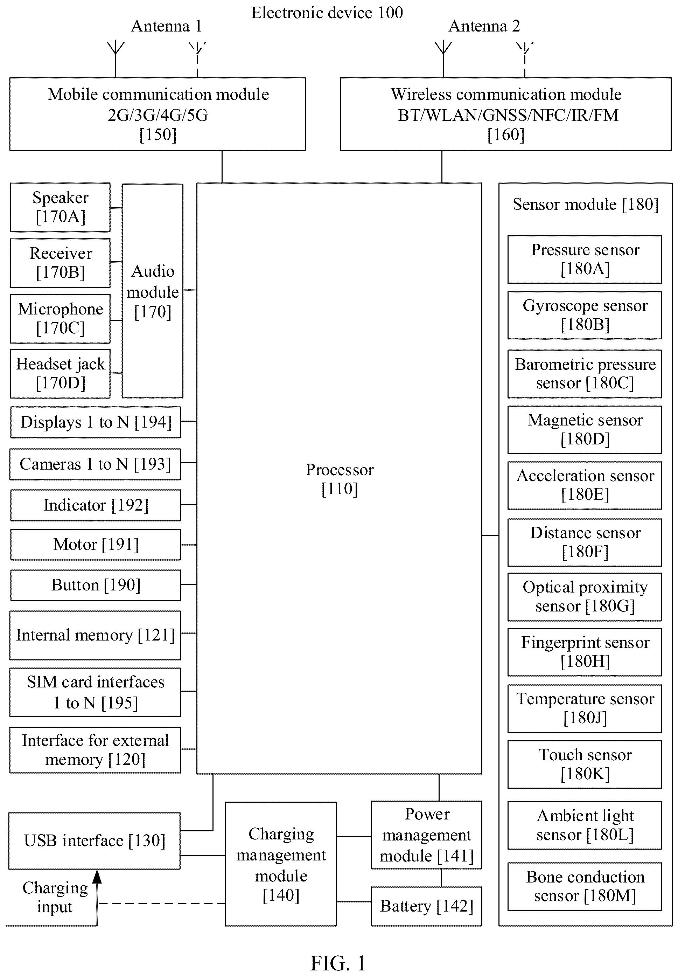

FIG. 1 is only a diagram of a hardware structure of an electronic device 100 according to an embodiment of this application. Based on the hardware structure shown in FIG. 1, another structural modification may further exist. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include one or more of the following: a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The following describes in detail the components of the electronic device 100 shown in FIG. 1.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on an instruction operation code and a timing signal, to complete control of instruction fetching and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instruction or the data again, the instruction or the data may be directly invoked from the memory, so that repeated access can be avoided, and a waiting time of the processor 110 can be reduced, thereby improving system efficiency.

In some embodiments, the processor 110 may include one or more interfaces. For example, the interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. It may be understood that an interface connection relationship between modules that is illustrated in this embodiment of this application is merely an example for description, and does not constitute a limitation on a structure of the electronic device 100.

The charging management module 140 is configured to receive a charging input from a charger. The power management module 141 is configured to connect to the battery 142, the charging management module 140, and the processor 110. A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology.

The electronic device 100 may implement a display function through the GPU, the display 194, the application processor, and the like. The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

In some other embodiments, the electronic device 100 may implement a shooting function through the ISP, the camera 193, the video codec, the GPU, the display 194, the application processor, and the like.

The external memory interface 120 may be configured to connect to an external storage card, for example, a Micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system and an application that is required by at least one function. In addition, the internal memory 121 may include a high-speed random access memory, and may also include a non-volatile memory, for example, at least one magnetic disk storage device, a flash memory device, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

Although not shown in FIG. 1, the electronic device 100 may further include a Bluetooth apparatus, a positioning apparatus, a flash, a micro projection apparatus, a near field communication (near field communication, NFC) apparatus, and the like. Details are not described herein.

It may be understood that the structure shown in this embodiment of this application does not constitute a specific limitation on the electronic device 100. In some other embodiments of this application, the electronic device 100 may include more or fewer components than those shown in FIG. 1, or combine some components, or split some components, or have different component arrangements. The components shown in FIG. 1 may be implemented by hardware, software, or a combination of software and hardware.

The following embodiments may be all implemented by the electronic device 100 having the foregoing hardware structure.

The following describes a software architecture of the electronic device.

A software system of the electronic device may use a layered architecture, an event-driven architecture, a microkernel architecture, a microservice architecture, or a cloud architecture. In embodiments of this application, a software system (for example, an Android Android^{®} system) with a layered architecture is used as an example to describe a software structure of the electronic device.

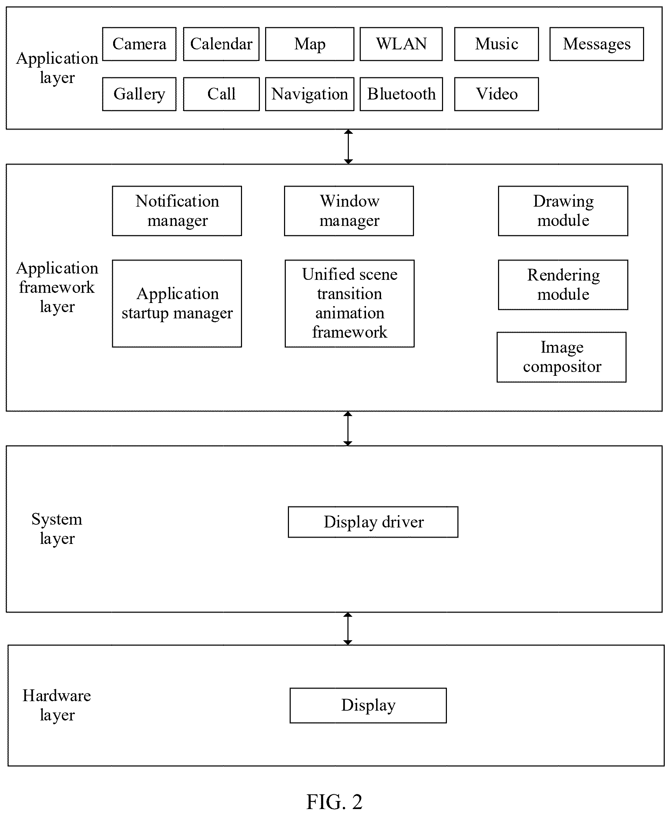

FIG. 2 is an example of a diagram of a layered software structure of an electronic device according to an embodiment of this application. In the layered architecture, the software system of the electronic device is divided into several layers, and each layer has a clear role and task. The layers communicate with each other through a software interface.

In some embodiments, the Android system is divided into four layers: an application (application) layer, an application framework (application framework) layer, Android runtime (Android runtime) and a system library, and a kernel (kernel) layer respectively. Layering of the software structure of the electronic device is not limited in this embodiment of this application. The Android runtime and the system library, and the kernel layer may be considered as one layer, which is referred to as a system layer. It should be understood that, in FIG. 2, a hardware layer in the electronic device is further added based on the Android system.

It should be understood that modules included in the layers shown in FIG. 2 are modules in embodiments of this application, and modules included in the following layers do not constitute a limitation on a structure of the electronic device and layers (described as examples) at which modules are deployed. In an embodiment, the modules shown in FIG. 2 may be separately deployed, or several modules may be deployed together. Division into the modules in FIG. 2 is an example. In an embodiment, names of the modules shown in FIG. 2 are examples for description.

The application layer may include a series of application packages. The application layer may include but is not limited to applications such as Camera, Gallery, Calendar, Call, Map, Navigation, Bluetooth, Music, Video, and Messages. The applications may include a system application and a third-party application.

The application framework layer may provide an application programming interface (application programming interface, API) and a programming framework for an application at the application layer. The application framework layer may include some predefined functions. With reference to FIG. 2, the application framework layer may include:
an application startup manager, a unified scene transition animation framework, a window manager (window manager service, WMS), a notification manager, a drawing module, a rendering module, an image compositor (Surface Flinger, SF), and the like.

The application startup manager is configured to perform application software startup operation management.

The unified scene transition animation framework may include feature animation management, transition animation management, and animation layering management. The unified scene transition animation framework takes over animation processes customized by the system and the application during switching between applications and components in a specified scene. Stubbing in the system framework is used to switch a transition animation logic to the unified scene transition animation framework for unified processing.

The window manager is configured to manage a user interface.

The notification manager enables an application to display, in the status bar, notification information, which may be used for conveying a notification-type message that may automatically disappear after a short stay without user interaction. For example, the notification manager is configured to: notify download completion, give a message notification, and the like. The notification manager may alternatively be a notification that appears in a top status bar of the system in a form of a chart or scroll bar text, for example, a notification of an application running on the background or a notification that appears on the screen in a form of a dialog window. For example, text information is prompted in the status bar, an alert tone is made, the electronic device vibrates, or an indicator blinks.

The drawing module is configured to draw a user interface. The rendering module is configured to perform rendering processing on the user interface drawn by the drawing module. The image compositor is configured to perform layer compositing on rendered layers, to obtain a to-be-displayed user interface.

In this embodiment of this application, the Android runtime, the system library, and the kernel layer are considered as one layer. Therefore, the system layer may include the Android runtime, the system library, and functional modules at the kernel layer. With reference to FIG. 2, the system layer may include a plurality of functional modules, for example, a surface manager (surface manager), a media library (Media Library), a three-dimensional graphics processing library (for example, an OpenGL ES), a 2D graphics engine (for example, an SGL), and the like. The surface manager is configured to: manage a display subsystem and provide fusion of 2D and 3D layers for a plurality of applications. The media library supports playback and recording in a plurality of commonly used audio and video formats, and static image files. The media library may support a plurality of audio and video encoding formats, such as MPEG4, H.264, MP3, AAC, AMR, JPG, and PNG. The three-dimensional graphics processing library is configured to implement three-dimensional graphics drawing, image rendering and compositing, layer processing, and the like. The 2D graphics engine is a drawing engine for 2D drawing.

In addition, the system layer further includes a hardware driver configured to drive hardware to work. For example, a driver layer includes a sensor driver, a display driver (display driver), a graphics processing unit driver (graphics processing unit driver, GPU driver), and the like. This is not limited in this embodiment of this application. It should be understood that FIG. 2 shows the display driver in this embodiment of this application. The display driver is configured to drive a display to display a user interface.

The hardware layer includes hardware in the electronic device. It may be understood that the hardware layer in FIG. 2 shows a display and the like in the following embodiments.

With reference to the accompanying drawings, the following describes a display method for an electronic device provided in an embodiment of this application. The following embodiments may be combined with each other, and a same or similar concept or process may not be described repeatedly in some embodiments.

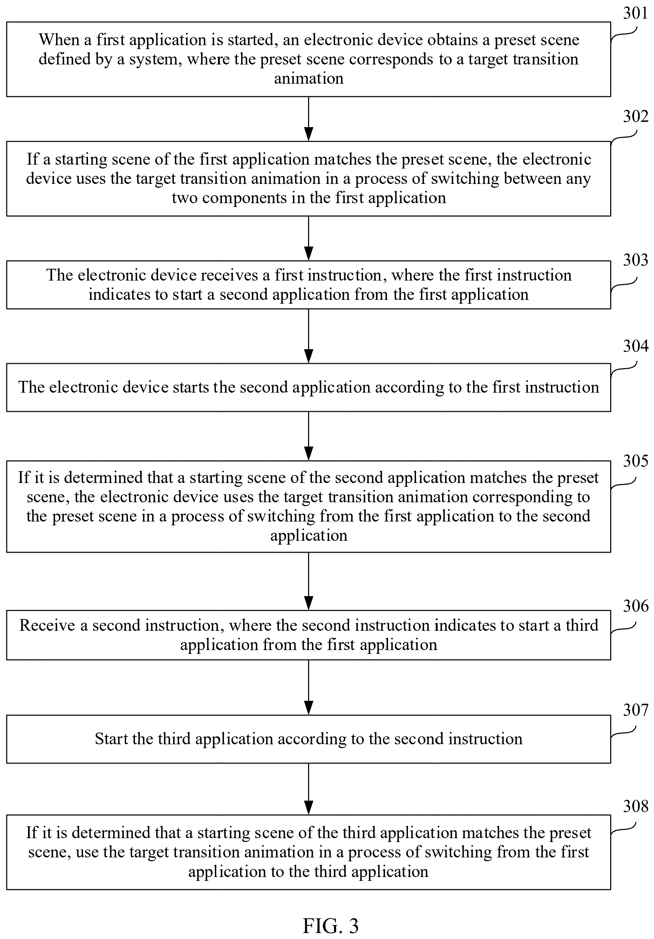

FIG. 3 is a schematic flowchart of a display method for an electronic device according to an embodiment of this application. As shown in FIG. 3, the procedure may include the following steps.

Step 301: When a first application is started, an electronic device obtains a preset scene defined by a system, where the preset scene corresponds to a target transition animation.

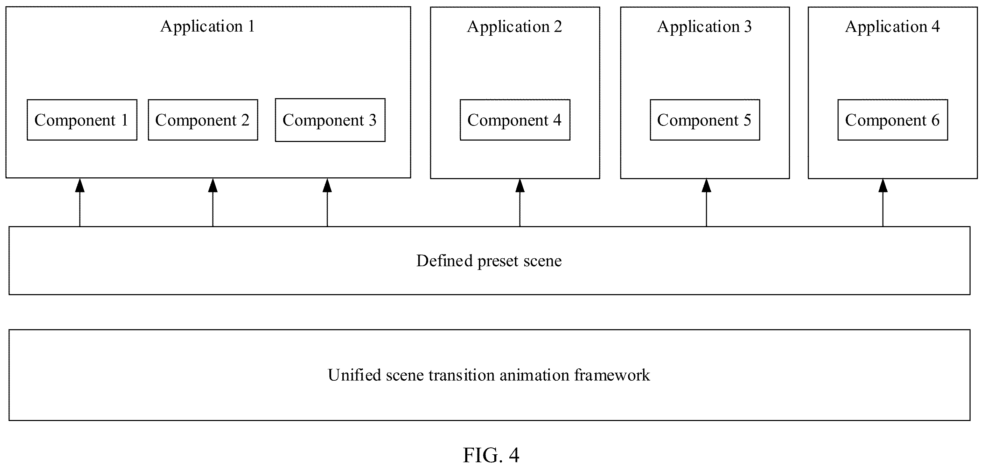

Before step 301, the preset scene may be defined first. As shown in FIG. 4, the electronic device includes an application 1, an application 2, an application 3, and an application 4. The application 1 includes a component 1, a component 2, and a component 3, the application 2 includes a component 4, the application 3 includes a component 5, and the application 4 includes a component 6. The preset scene may be defining one or more applications in the four applications.

An example in which a preset scene 1 is starting any application from a notification bar, and further starting one or more other applications from the application, and the preset scene 1 corresponds to a target transition animation 1 is used. For example, starting the application 1 from the notification bar, starting the application 2 from the application 1, starting the application 3 from the application 2, and starting the application 4 from the application 3, and the like belong to the preset scene 1. After the application 1 is started by using the notification bar, it may be learned that a scene declared by the application 1 is the preset scene 1. In this case, the target transition animation 1 is used for switching between applications when the application 1 starts the application 2, switching between applications when the application 2 starts the application 3, switching between applications when the application 3 starts the application 4, and switching between components in each application such as the application 1, the application 2, the application 3, and the application 4. For another example, starting the application 2 from the notification bar and starting the application 4 from the application 2 also belong to the preset scene 1. The target transition animation 1 is used for switching between the application 2 and the application 4, switching between components in the application 2, and switching between components in the application 4.

An example in which a preset scene 2 is starting any application from a DingTalk application, and the preset scene 1 corresponds to a target transition animation 2 is used. Starting the application 2 from the DingTalk desktop application and starting the application 3 and the like from the application 2 belong to the same preset scene 2. The target transition animation 2 is used for switching between the application 2 and the application 3, switching between components in the application 2, and switching between components in the application 3.

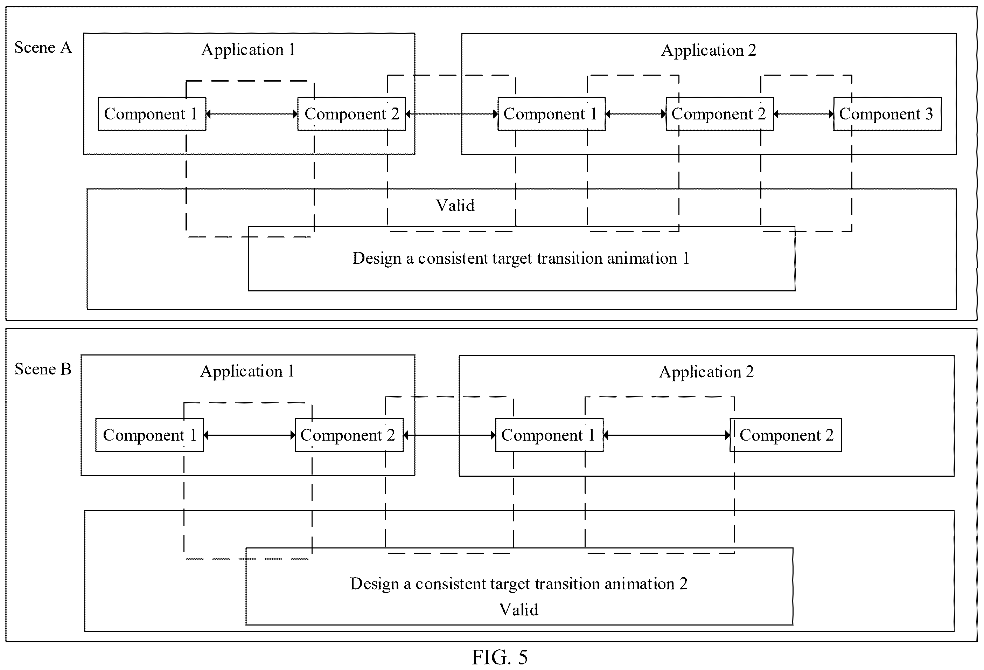

With reference to FIG. 5, the following describes, by using examples, the target transition animation corresponding to the preset scene in step 301.

As shown in FIG. 5, the electronic device includes the application 1 and the application 2. For example, a preset scene A is starting the application 1 from a desktop and starting the application 2 from the application 1, and the preset scene A corresponds to the target transition animation 1. A preset scene B is starting the application 1 from the notification bar application and starting the application 2 from the application 1, and the preset scene B corresponds to the target transition animation 2.

In the preset scene A, the target transition animation 1 is used as a transition animation of switching between components within the application 1, window switching between the application 1 and the application 2, and switching between components within the application 2. In the preset scene B, the target transition animation 2 is used as a transition animation of switching between components within the application 1, window switching between the application 1 and the application 2, and switching between components within the application 2.

After step 301, the electronic device may further determine whether a starting scene of the first application matches the preset scene. The following describes a specific implementation.

When the first application is started, a startup notification message that the first application is started may be sent to an application startup manager. The application startup manager may check startup declaration content defined by the system. For example, the startup declaration content may include a meta-data description and an intent description that are carried when the first application is started, and information that is about an application from which the application 1 is started and that is obtained by the application startup manager.

Then, the application startup manager may notify a unified scene transition animation framework to check the starting scene of the first application, and after determining a check result corresponding to the first application, the unified scene transition animation framework sends the check result corresponding to the first application to the application startup manager. The check result corresponding to the first application may include that the starting scene of the first application matches the preset scene, or that the starting scene of the first application does not match the preset scene.

An example in which the first application is the application 1 is still used. For example, the preset scene A includes starting the application 1 from a desktop application. If the unified scene transition animation framework finds that the application 1 is started from the desktop application, it is determined that the starting scene of the application 1 matches the preset scene A. If the unified scene transition animation framework finds that the application 1 is started from another entry other than the desktop application, for example, finds that the application 1 is started from the notification bar, it is determined that the starting scene of the application 1 does not match the preset scene A.

In this example, an example in which if the preset scene A is completely consistent with the starting scene of the application 1, it is determined that the starting scene of the application 1 matches the preset scene A is used for description. It should be understood that, when the preset scene A is not completely consistent with the starting scene of the application 1, for example, the preset scene A includes the starting scene of the application 1, it is also considered that the starting scene of the application 1 matches the preset scene A. For example, the preset scene A includes starting the application 1 from the desktop application and starting the application 2 from the application 1. If the unified scene transition animation framework finds that the application 1 is started from the desktop application, it is determined that the starting scene of the application 1 matches the preset scene.

Step 302: If the starting scene of the first application matches the preset scene, the electronic device uses the target transition animation in a process of switching between any two components in the first application.

It should be understood that, in step 301, the preset scene defined by the system may include one or more scenes. When the preset scene defined by the system includes a plurality of scenes, if any one of the plurality of scenes matches the starting scene of the first application, it indicates that the starting scene of the first application matches the preset scene; or if no one of the plurality of scenes matches the starting scene of the first application, it indicates that the starting scene of the first application does not match the preset scene.

In some other embodiments, if the starting scene of the first application does not match the preset scene, a system default component switching animation or a customized component switching animation that corresponds to the first application is used in the process of switching between any two components in the first application.

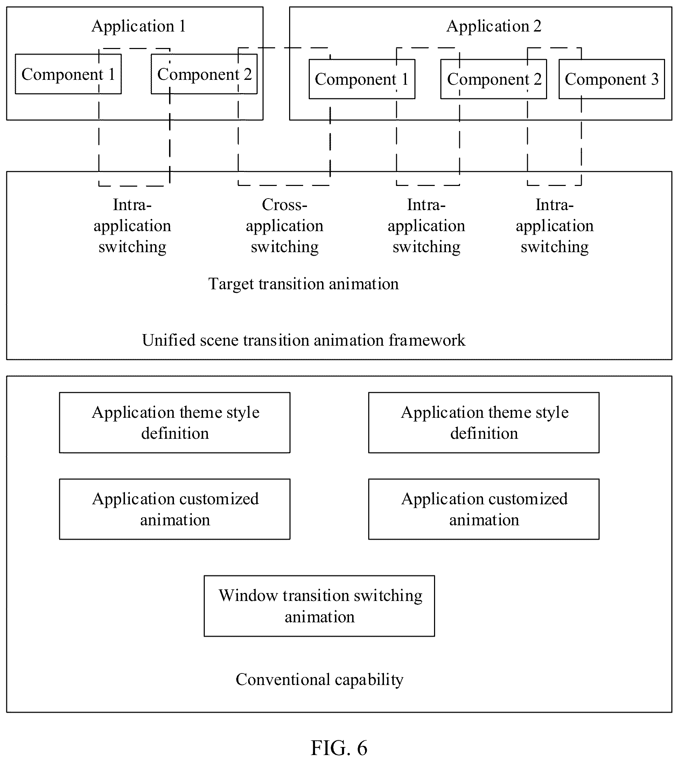

Using an example in which the first application is the application 1 shown in FIG. 6, the application 1 includes a component 1 and a component 2. In this embodiment of this application, the built unified scene transition animation framework covers a conventional capability, for example, a system default animation, an application theme style definition, and an intra-application customized animation. When the starting scene of the application 1 is the preset scene defined by the system, the unified scene transition animation framework may enable a function of disabling the system default animation and the customized animation that is of the application 1. In this way, in the preset scene during switching between any two components (for example, the component 1 and the component 2 in the application 1) of the application 1, the unified scene transition animation framework uses the target transition animation defined in the preset scene. In this way, it is ensured that a switching animation and smoothness are consistent when switching is performed between any two components (for example, the component 1 and the component 2 in the application 1) of the application 1. When the starting scene of the application 1 is not the preset scene defined by the system, the switching animation during switching between any two components (for example, the component 1 and the component 2 in the application 1) of the application 1 retains the application customized animation or the system default animation.

Step 303: The electronic device receives a first instruction, where the first instruction indicates to start a second application from the first application.

An example in which the first application is the application 1 and the second application is the application 2 is used. For example, when the application 1 receives a page link of the application 2, the application 2 may be started by receiving a tap operation on the page link of the application 2. In this example, the first instruction may be an instruction triggered by the tap operation.

Step 304: The electronic device starts the second application according to the first instruction.

When the second application is started, a notification message that the second application is started is sent to the application startup manager. Then, the application startup manager may notify the unified scene transition animation framework to check a starting scene of the second application. After determining a check result corresponding to the second application, the unified scene transition animation framework sends the check result corresponding to the second application to the application startup manager. The check result corresponding to the second application may include that the starting scene of the second application matches the preset scene, or that the starting scene of the second application does not match the preset scene.

Using an example in which the preset scene A includes starting the application 1 from the desktop application and starting the application 2 from the application 1, if the unified scene transition animation framework finds that the application 2 is started from the application 1, to be specific, the preset scene A includes the starting scene of the application 2, it is determined that the starting scene of the application 2 matches the preset scene A. If the unified scene transition animation framework finds that the application 2 is started from the application 3, to be specific, the preset scene A does not include the starting scene of the application 2, it is determined that the starting scene of the application 2 does not match the preset scene A.

Step 305: If it is determined that the starting scene of the second application matches the preset scene, the electronic device uses the target transition animation corresponding to the preset scene in the process of switching from the first application to the second application.

After the second application is started in step 304, if it is determined that the starting scene of the second application matches the preset scene, the electronic device uses the target transition animation corresponding to the preset scene in the process of switching between any two components in the second application.

Still using an example in which the first application is the application 1 shown in FIG. 6, and the second application is the application 2 shown in FIG. 6, the application 1 includes a component 1 and a component 2, and the application 2 includes a component 1, a component 2, and a component 3. In this embodiment of this application, the built unified scene transition animation framework covers the conventional capability, for example, the system default animation, the application theme style definition, and the intra-application customized animation. When the starting scene of the application 1 and the starting scene of the application 2 match the preset scene A defined by the system, the unified scene transition animation framework may enable the function of disabling the system default animation and the customized animations of the application 1 and the application 2. In this way, in the preset scene A during switching between any two components (for example, the component 1 and the component 2 in the application 1) of the application 1, cross-application switching between the application 1 and the application 2, and switching between any two components (for example, the component 1 and the component 2 in the application 2, and for another example, the component 2 and the component 3 in the application 2) of the application 2, the unified scene transition animation framework uses the target transition animation 1 defined in the preset scene A. In this way, it is ensured that a switching animation and smoothness are consistent during intra-application component switching and cross-application switching. When the starting scene of the application 2 is not the preset scene defined by the system, the switching animation during switching between any two components (for example, the component 1 and the component 2 in the application 2) of the application 2 retains the application customized animation or the system default animation, and retains the system default animation during inter-application window switching from the application 1 to the application 2.

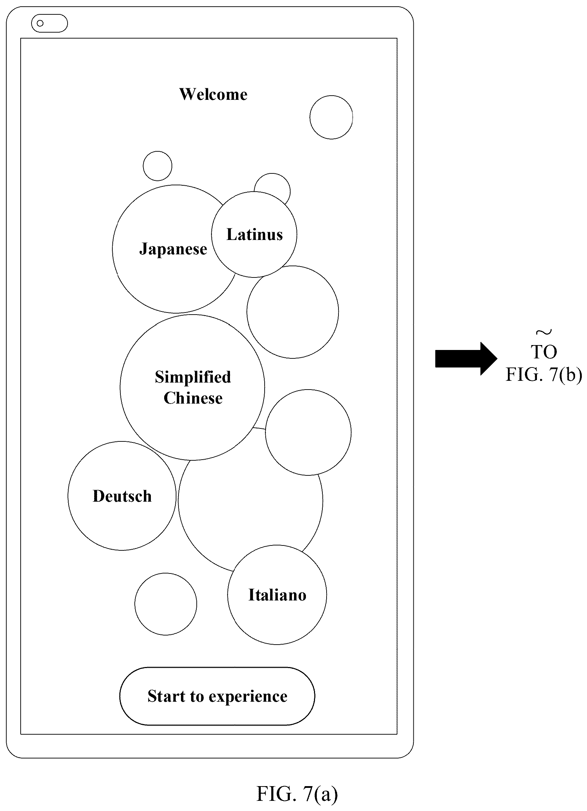

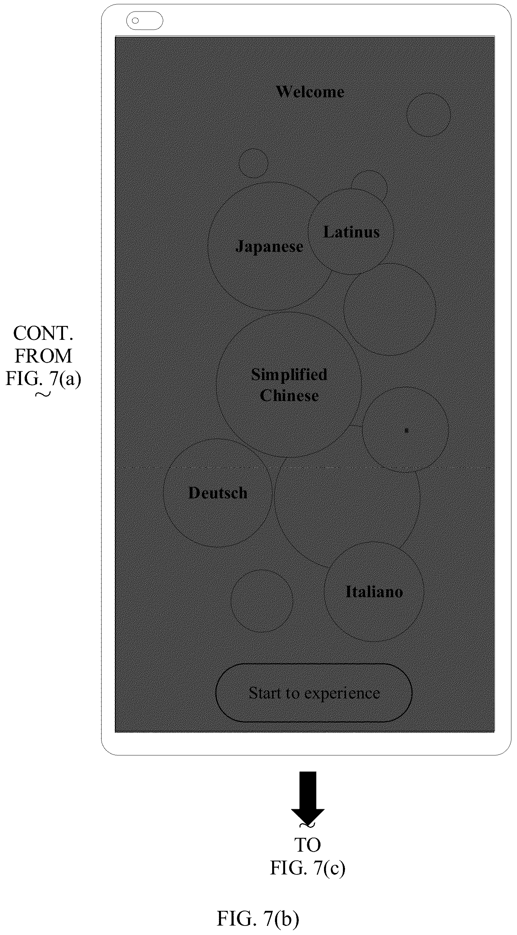

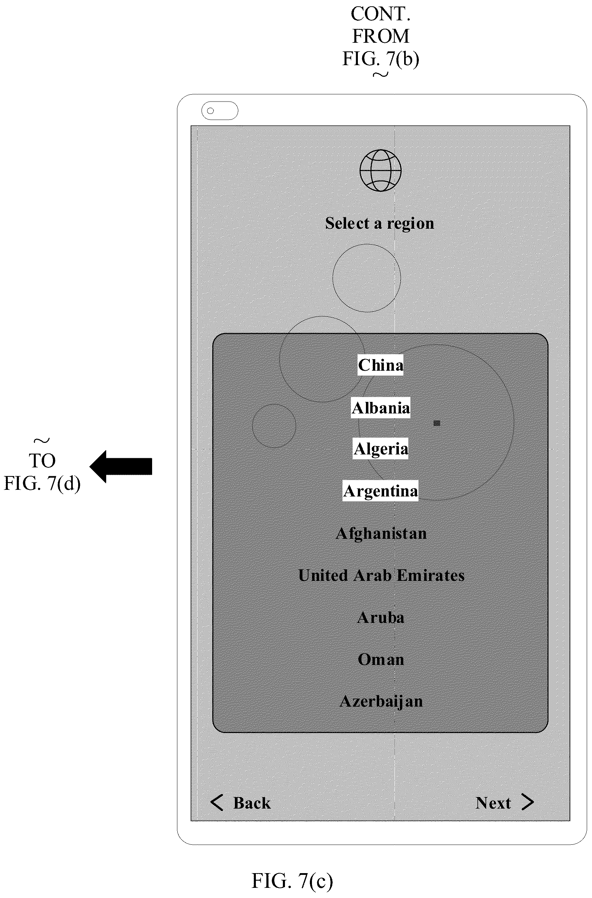

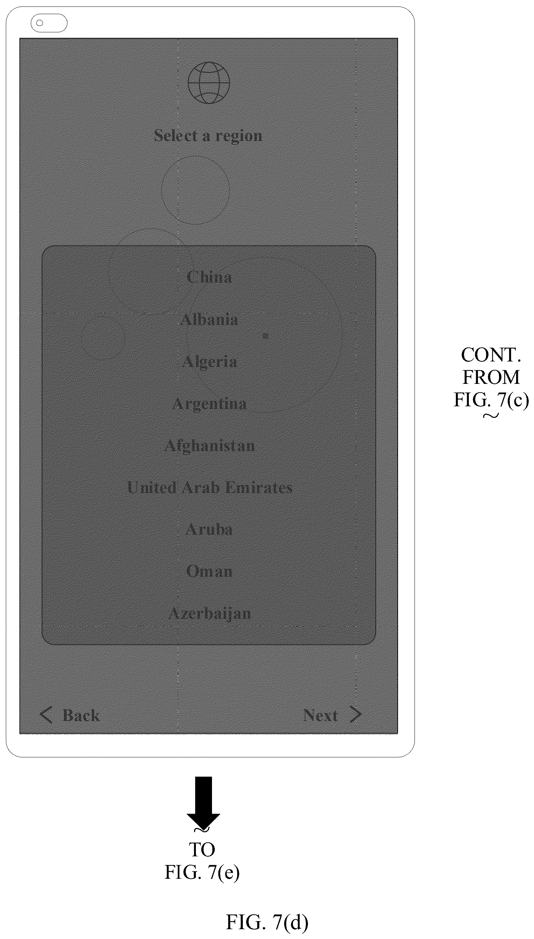

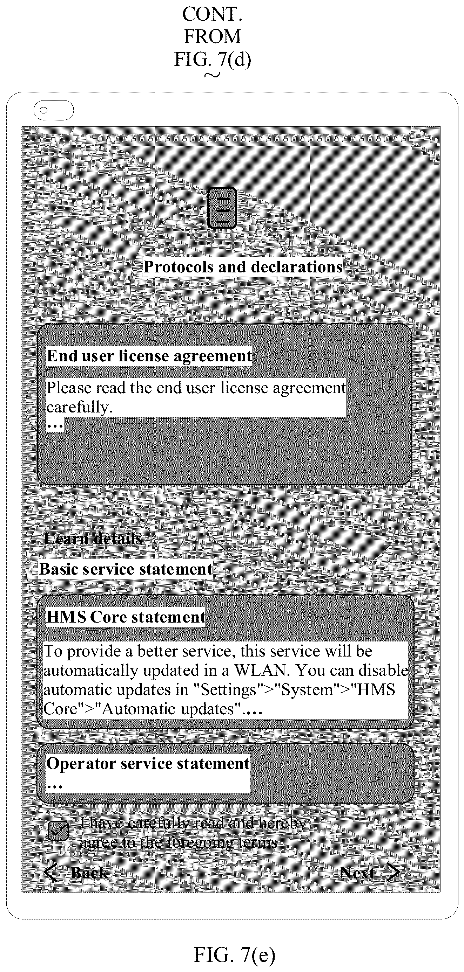

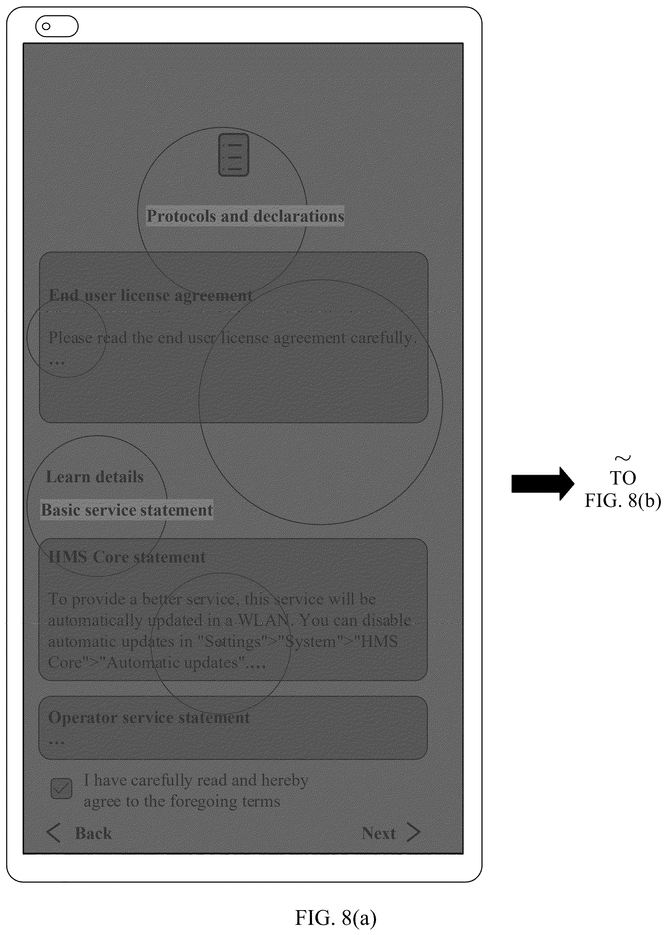

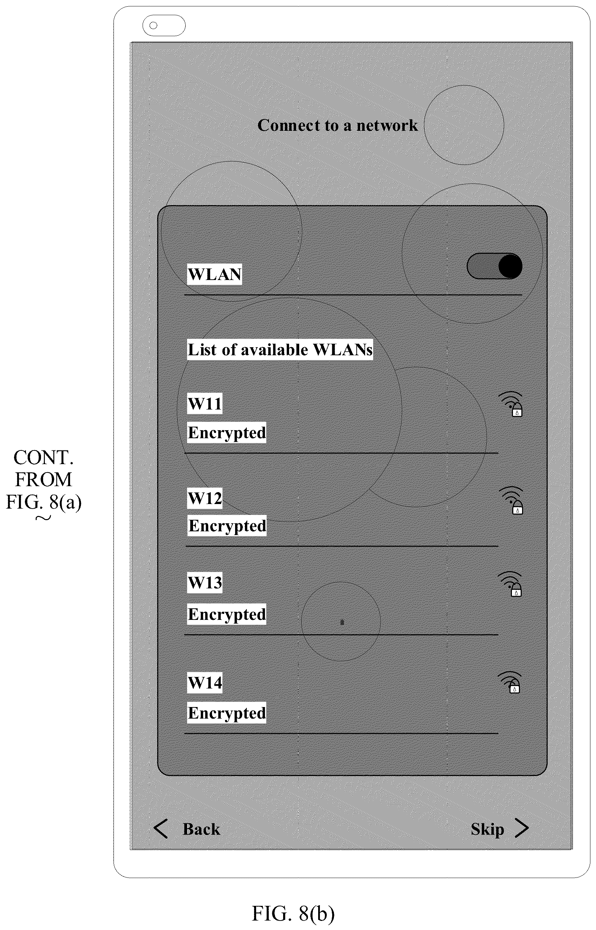

The following uses an example in which the preset scene is an out-of-box experience (out-of-box experience, OOBE) scene, to describe consistency of animation effects for intra-application component switching and inter-application inter-application window switching with reference to FIG. 7(a), FIG. 7(b), FIG. 7(c), FIG. 7(d), and FIG. 7(e) and FIG. 8(a) and FIG. 8(b).

For example, the target transition animation corresponding to the OOBE scene includes: Using an example in which the component 1 of the first application is switched to the component 2, a component switching animation is that the component 1 fades out, and the component 2 fades in, and in a process of switching between the two components, a plurality of balls used as the background present rolling effect; and using an example in which a window of the first application is switched to a window of the second application, the window of the first application fades out, and the window of the second application fades in, and in a process of inter-application window switching, a plurality of small balls used as the background present rolling effect.

FIG. 7(a), FIG. 7(b), FIG. 7(c), FIG. 7(d), and FIG. 7(e) are a group of diagrams of user interfaces for intra-application component switching according to an embodiment of this application.

In the OOBE scene, the first application includes, for example, a plurality of components, such as voice selection, region selection, and protocols and declarations. It should be understood that the first application may further include more or fewer components. This is not limited in this example.

The electronic device enters the OOBE scene, and first displays a user interface of a language selection component shown in FIG. 7(a). After selecting a language, the electronic device receives a user operation 1. For example, the user operation 1 is used to switch to a user interface of a region selection component, and the electronic device performs a switching action in response to the user operation 1. In the process of switching from the language selection component to the region selection component, the language selection component fades out first, and a picture of a frame in a fade-out process is shown in FIG. 7(b), until the language selection component fades out completely. Then, the region selection component fades in, and a user interface of the region selection component shown in FIG. 7(c) is displayed. In addition, in the process of switching from the language selection component shown in FIG. 7(a) to the region selection component shown in FIG. 7(c), the background balls present rolling effect.

Then, the electronic device receives a user operation 2, where the user operation 2 may be a tap operation on a "Next" button. The user operation 2 is used to switch from the region selection component to the protocols and declarations component, and the electronic device performs a switching action in response to the user operation 2. In the process of switching from the region selection component to the protocols and declarations component, the region selection component fades out first, and a picture of a frame in a fade-out process is shown in FIG. 7(d), until the region selection component fades out completely. Then, the protocols and declarations component fades in, and a user interface of the protocols and declarations component shown in FIG. 7(e) is displayed. In addition, in the process of switching from the region selection component shown in FIG. 7(c) to the protocols and declarations component shown in FIG. 7(e), the background balls present rolling effect.

When the electronic device displays the user interface of the protocols and declarations component shown in FIG. 7(e), the electronic device receives a user operation 3. For example, the user operation 3 may be a tap operation on a "Next" button. The user operation 3 is used to switch from the protocols and declarations component in the first application to a network connection component in the second application. The electronic device performs a switching action in response to the user operation 3. In the process of switching from the protocols and declarations component in the first application to the network connection component in the second application, the protocols and declarations component in the first application fades out first, and a picture of a frame in a fade-out process is shown in FIG. 8(a), until the protocols and declarations component fades out completely. Then, the network connection component fades in, and a user interface of the network connection component shown in FIG. 8(b) is displayed. In addition, in the process of switching from the region selection component shown in FIG. 7(e) to the protocols and declarations component shown in FIG. 8(b), the background balls present rolling effect.

In the foregoing embodiment, in the preset scene defined by the system, the target transition animation corresponding to the same preset scene is used for intra-application component switching and inter-application window switching, so that consistency of animation effects during transition between different applications can be ensured.

After step 305, the electronic device may further exit the preset scene after the second application exits, and the unified scene transition animation framework may enable to restore the system default animation and the customized animation that is of the second application.

In a possible implementation, the electronic device may further receive a third instruction for exiting the second application; exit the second application according to the third instruction; and exit the preset scene after exiting the second application, and then the electronic device restores the system default component switching animation and the customized component switching animation that corresponds to the second application. Then, the second application is started again, and the system default component switching animation or the customized component switching animation that corresponds to the second application is used in the process of switching between any two components in the second application. After the system default component switching animation and the customized component switching animation that corresponds to the second application are restored, a fourth application is started; and a system default window switching animation is used in a process of switching from the second application to the fourth application.

In some other embodiments, after step 304, if it is determined that the starting scene of the second application does not match the preset scene, the system default window switching animation is used in the process of switching from the first application to the second application, and/or the system default component switching animation or the customized component switching animation that corresponds to the second application is used in the process of switching between any two components in the second application.

Step 306: Receive a second instruction, where the second instruction indicates to start a third application from the first application.

Step 307: Start the third application according to the second instruction.

Step 308: If it is determined that a starting scene of the third application matches the preset scene, use the target transition animation in a process of switching from the first application to the third application.

In an implementation, if it is determined that the starting scene of the third application matches the preset scene, the electronic device may disable a customized component switching animation corresponding to the third application, and/or use the target transition animation in a process of switching between any two components in the third application.

In some other embodiments, if it is determined that the starting scene of the third application does not match the preset scene, the system default window switching animation is used in the process of switching from the first application to the third application, and/or, the system default component switching animation or the customized component switching animation that corresponds to the third application is used in the process of switching between any two components in the third application.

In this embodiment of this application, in a same preset scene, a target transition animation corresponding to the preset scene may be used for switching between any two applications. For example, if switching from the first application to the second application and switching from the first application to the third application belong to a same preset scene A, a target transition animation 1 corresponding to the preset scene A is used for switching from the first application to the second application, and the target transition animation 1 corresponding to the preset scene is also used for switching from the first application to the third application. In this way, consistency of animation effects during transition between different applications can be ensured.

Further, the target transition animation 1 corresponding to the preset scene A may also be used for switching between components in the first application, switching between components in the second application, and switching between components in the third application, to ensure consistency of animations effects for inter-application component switching in a same preset scene.

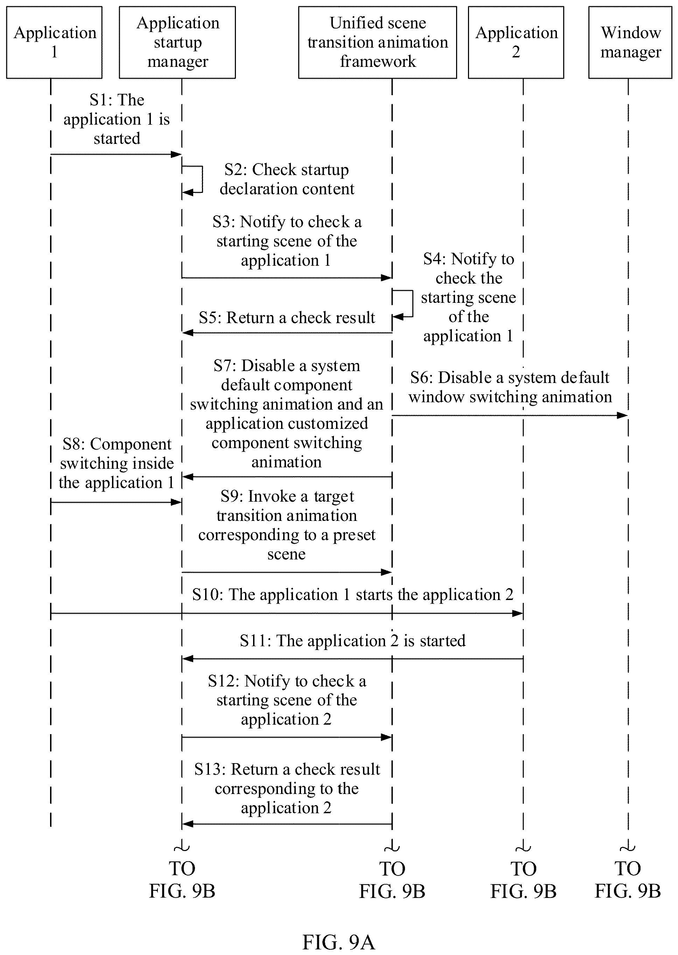

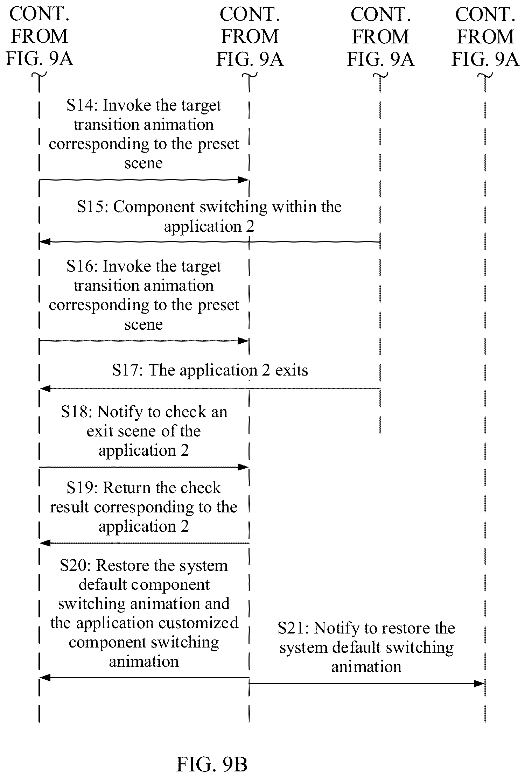

Based on the system architecture shown in FIG. 2, with reference to FIG. 9A and FIG. 9B, the following shows an example of a diagram of a processing procedure of each service module in the system architecture during scene mismatching. As shown in FIG. 9A and FIG. 9B, the procedure may include the following steps.

S1: When an application 1 is started, the application 1 notifies an application startup manager that the application 1 is started.

S2: The application startup manager checks startup declaration content defined by a system.

For example, the startup declaration content may include a meta-data description and an intent description that are carried when the application 1 is started, and information that is about an application from which the application 1 is started and that is obtained by the application startup manager.

S3: The application startup manager notifies a unified scene transition animation framework to check a starting scene of the application 1.

S4: The unified scene transition animation framework checks the starting scene of the application 1, to obtain a check result corresponding to the application 1.

S5: The unified scene transition animation framework returns the check result corresponding to the application 1 to the application startup manager.

S6: If the check result corresponding to the application 1 is that the starting scene of the application 1 matches a preset scene, the unified scene transition animation framework notifies a window manager to disable a system default window switching animation.

S7: The unified scene transition animation framework notifies the application startup manager to disable a system default component switching animation and an application customized component switching animation.

S8: The application 1 sends component switching within the application 1 to the application startup manager.

S9: The application 1 invokes, from the unified scene transition animation framework, a target transition animation corresponding to the preset scene.

S10: The application 1 starts an application 2.

S11: The application 2 notifies the application startup manager that the application 2 is started.

S12: The application startup manager notifies the unified scene transition animation framework to check a starting scene of the application 2.

S13: The unified scene transition animation framework returns the check result corresponding to the application 2 to the application startup manager.

S14: if the check result corresponding to the application 1 is that the starting scene of the application 2 matches the preset scene, the application startup manager invokes, from the unified scene transition animation framework, the target transition animation corresponding to the preset scene.

S15: The application 2 sends component switching within the application 2 to the application startup manager.

S16: The application startup manager invokes, from the unified scene transition animation framework, the target transition animation corresponding to the preset scene.

S17: The application 2 notifies the application startup manager that the application 2 exits.

S18: The application startup manager notifies the unified scene transition animation framework to check an exit scene of the application 2.

S19: The unified scene transition animation framework returns a check result corresponding to the application 2 to the application startup manager.

The check result corresponding to the application 2 includes exiting the preset scene.

S20: The unified scene transition animation framework notifies the application startup manager to restore the system default component switching animation and the application customized component switching animation.

S21: The unified scene transition animation framework notifies the window manager to restore the system default window switching animation.

The procedure shown in FIG. 9A and FIG. 9B is merely an example. Some steps in the foregoing procedure may be optional steps, or some steps in the foregoing procedure may be recombined. This is not limited in this embodiment of this application.

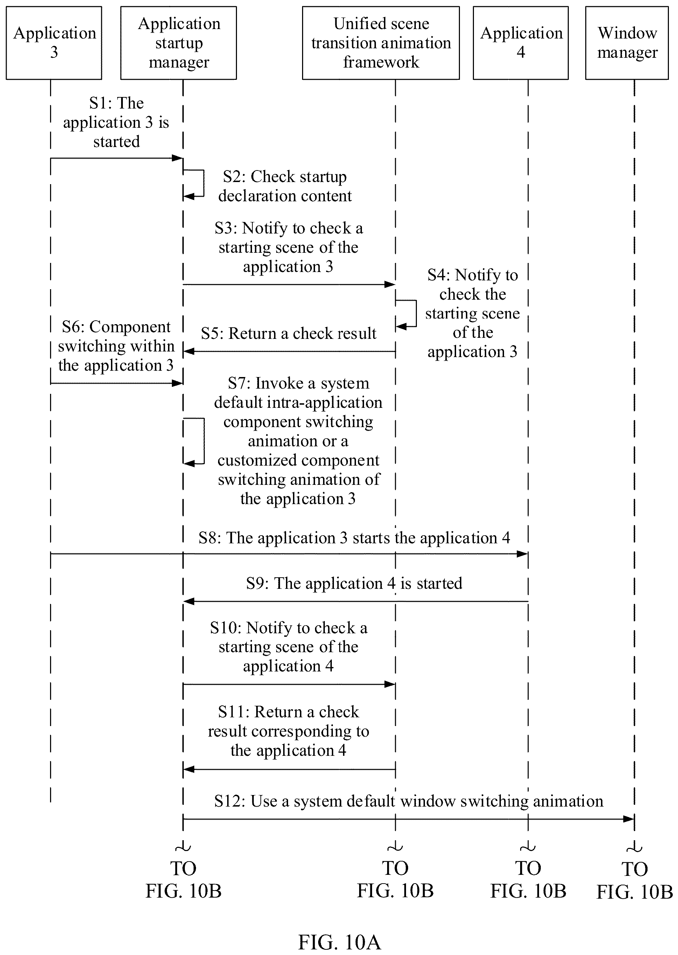

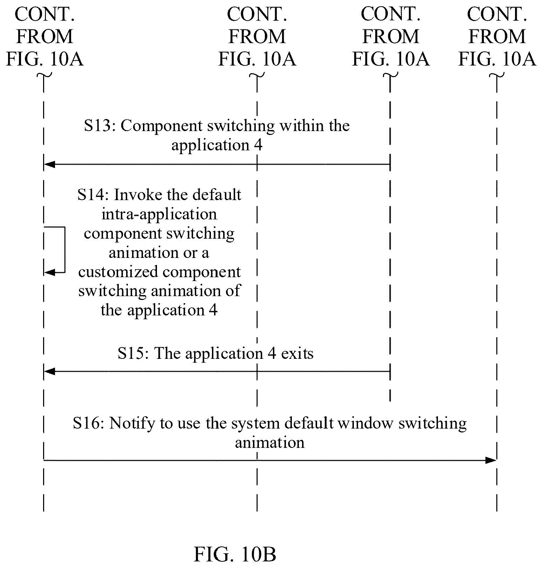

Based on the system architecture shown in FIG. 2, with reference to FIG. 10A and FIG. 10B, the following shows an example of a diagram of a processing procedure of each service module in the system architecture during scene mismatching. As shown in FIG. 10A and FIG. 10B, the procedure may include the following steps.

S1: When an application 3 is started, the application 3 notifies an application startup manager that the application 3 is started.

S2: The application startup manager checks startup declaration content defined by a system.

For example, the startup declaration content may include a meta-data description and an intent description that are carried when the application 3 is started, and information that is about an application from which the application 3 is started and that is obtained by the application startup manager.

S3: The application startup manager notifies a unified scene transition animation framework to check a starting scene of the application 3.

S4: The unified scene transition animation framework checks the starting scene of the application 3, to obtain a check result corresponding to the application 3.

S5: The unified scene transition animation framework returns the check result corresponding to the application 3 to the application startup manager.

The check result corresponding to the application 3 includes that the starting scene of the application 3 does not match a preset scene.

S6: The application 3 sends component switching within the application 3 to the application startup manager.

S7: The application startup manager invokes a system default intra-application component switching animation or a customized component switching animation of the application 3.

S8: The application 3 starts an application 4.

S9: The application 4 notifies the application startup manager that the application 4 is started.

S10: The application startup manager notifies the unified scene transition animation framework to check a starting scene of the application 4.

S11: The unified scene transition animation framework returns the check result corresponding to the application 4 to the application startup manager.

S12: The application startup manager notifies a window manager to use a system default window switching animation.

S13: The application 4 sends component switching within the application 4 to the application startup manager.

S14: The application startup manager invokes the system default intra-application component switching animation or a customized component switching animation of the application 4.

S15: The application 4 notifies the application startup manager that the application 4 exits.

S16: The application startup manager notifies the window manager to use the system default window switching animation.

The procedure shown in FIG. 10A and FIG. 10B is merely an example. Some steps in the foregoing procedure may be optional steps, or some steps in the foregoing procedure may be recombined. This is not limited in this embodiment of this application.

In the foregoing embodiments provided in this application, the methods provided in embodiments of this application are described from a perspective of the electronic device as an execution body. To implement functions in the methods provided in embodiments of this application, the electronic device may include a hardware structure and/or a software module, and implement the foregoing functions in a form of a hardware structure, a software module, or a hardware structure plus a software module. Whether a function in the foregoing functions is performed in the manner of the hardware structure, the software module, or the combination of the hardware structure and the software module depends on particular applications and design constraint conditions of the technical solutions.

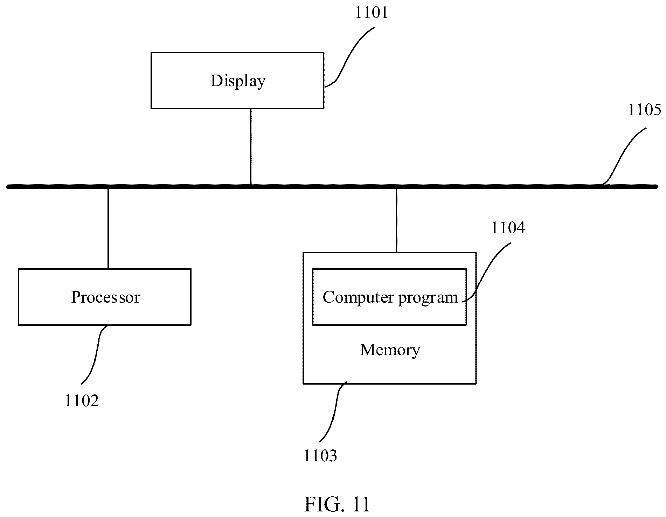

When hardware is used for implementation, for hardware implementation of the electronic device, refer to FIG. 11 and related descriptions thereof.

With reference to FIG. 11, the electronic device includes a display 1101, where the display 1101; one or more processors 1102; a memory 1103; one or more applications (not shown); and one or more computer programs 1104. The foregoing components may be connected by using one or more communication buses 1105. The one or more computer programs 1104 are stored in the memory 1103 and are configured to be executed by the one or more processors 1102. The one or more computer programs 1104 include instructions, and the instructions may be used to perform the method in any one of the foregoing embodiments.

An embodiment of this application further provides a computer storage medium. The computer storage medium stores computer instructions. When the computer instructions are run on an electronic device, the electronic device is enabled to perform the foregoing related method steps, to implement the methods in the foregoing embodiments.

An embodiment of this application further provides a computer program product. When the computer program product is run on a computer, the computer is enabled to perform the foregoing related steps to implement the methods in the foregoing embodiments.

In addition, an embodiment of this application further provides an apparatus. The apparatus may be specifically a chip, a component, or a module. The apparatus may include a processor and a memory that are connected. The memory is configured to store computer executable instructions. When the apparatus runs, the processor may execute the computer executable instructions stored in the memory, so that the chip performs the translation method in the foregoing method embodiments.

The electronic device, the computer storage medium, the computer program product, or the chip provided in embodiments of this application is configured to perform the corresponding methods provided above. Therefore, for beneficial effects that can be achieved, refer to beneficial effects in the corresponding methods provided above. Details are not described herein again.

Based on the descriptions of the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be reflected in a form of a software product. The software product is stored in a storage medium and includes several instructions for enabling a device (which may be a single-chip microcomputer, a chip, or the like) or a processor (processor) to perform all or some of steps of methods in embodiments of this application. The foregoing storage medium includes any medium that can store program code, such as a USB flash drive, a removable hard disk, a read only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A display method for an electronic device, applied to the electronic device with a display, wherein the method comprises:
when a first application is started, obtaining a preset scene defined by a system, wherein the preset scene corresponds to a target transition animation;
if a starting scene of the first application matches the preset scene, using the target transition animation in a process of switching between any two components in the first application;
receiving a first instruction, wherein the first instruction indicates to start a second application from the first application;
starting the second application according to the first instruction;
if it is determined that a starting scene of the second application matches the preset scene, using the target transition animation in a process of switching from the first application to the second application;
receiving a second instruction, wherein the second instruction indicates to start a third application from the first application;
starting the third application according to the second instruction; and
if it is determined that a starting scene of the third application matches the preset scene, using the target transition animation in a process of switching from the first application to the third application.

2. The method according to claim 1, wherein after starting the second application, the method further comprises:
if it is determined that the starting scene of the second application matches the preset scene, using the target transition animation in a process of switching between any two components in the second application; and/or
if it is determined that the starting scene of the third application matches the preset scene, using the target transition animation in a process of switching between any two components in the third application.

3. The method according to claim 1 or 2, wherein the method further comprises:
if the starting scene of the first application matches the preset scene, disabling a system default component switching animation and a customized component switching animation that corresponds to the first application;
if it is determined that the starting scene of the second application matches the preset scene, disabling a customized component switching animation corresponding to the second application; or
if it is determined that the starting scene of the third application matches the preset scene, disabling a customized component switching animation corresponding to the third application.

4. The method according to any one of claims 1 to 3, wherein after starting the second application, the method further comprises:
receiving a third instruction for exiting the second application;
exiting the second application according to the third instruction;
restoring the system default component switching animation and the customized component switching animation that corresponds to the second application;
starting the second application; and
using the system default component switching animation or the customized component switching animation that corresponds to the second application in the process of switching between any two components in the second application.

5. The method according to claim 4, wherein after restoring the system default component switching animation and the customized component switching animation that corresponds to the second application, the method further comprises:
starting a fourth application; and
using a system default window switching animation in a process of switching from the second application to the fourth application.

6. The method according to any one of claims 1 to 5, wherein the method further comprises:
if the starting scene of the first application does not match the preset scene, using the system default component switching animation or the customized component switching animation that corresponds to the first application in the process of switching between any two components in the first application.

7. The method according to any one of claims 1 to 6, wherein the method further comprises:
if it is determined that the starting scene of the second application does not match the preset scene, using the system default window switching animation in the process of switching from the first application to the second application, and/or using the system default component switching animation or the customized component switching animation that corresponds to the second application in the process of switching between any two components in the second application; or
if it is determined that the starting scene of the third application does not match the preset scene, using the system default window switching animation in the process of switching from the first application to the third application, and/or, using the system default component switching animation or the customized component switching animation that corresponds to the third application in the process of switching between any two components in the third application.

8. An electronic device, comprising a processor, a memory, and a display, wherein
the display is configured to display a user interface; and
the memory is configured to store one or more computer programs, and when the computer program is executed by the processor, the electronic device is enabled to perform:
when a first application is started, obtaining a preset scene defined by a system, wherein the preset scene corresponds to a target transition animation;
if a starting scene of the first application matches the preset scene, using the target transition animation in a process of switching between any two components in the first application;
receiving a first instruction, wherein the first instruction indicates to start a second application from the first application;
starting the second application according to the first instruction;
if it is determined that a starting scene of the second application matches the preset scene, using the target transition animation in a process of switching from the first application to the second application;
receiving a second instruction, wherein the second instruction indicates to start a third application from the first application;
starting the third application according to the second instruction; and
if it is determined that a starting scene of the third application matches the preset scene, using the target transition animation in a process of switching from the first application to the third application.

9. The electronic device according to claim 8, wherein when the computer program is executed by the processor, the electronic device is further enabled to perform:
if it is determined that the starting scene of the second application matches the preset scene, using the target transition animation in a process of switching between any two components in the second application; and/or
if it is determined that the starting scene of the third application matches the preset scene, using the target transition animation in a process of switching between any two components in the third application.

10. The electronic device according to claim 8 or 9, wherein when the computer program is executed by the processor, the electronic device is further enabled to perform:
if the starting scene of the first application matches the preset scene, disabling a system default component switching animation and a customized component switching animation that corresponds to the first application;
if it is determined that the starting scene of the second application matches the preset scene, disabling a customized component switching animation corresponding to the second application; or
if it is determined that the starting scene of the third application matches the preset scene, disabling a customized component switching animation corresponding to the third application.

11. The electronic device according to any one of claims 8 to 10, wherein when the computer program is executed by the processor, the electronic device is further enabled to perform:
receiving a third instruction for exiting the second application;
exiting the second application according to the third instruction;
restoring the system default component switching animation and the customized component switching animation that corresponds to the second application;
starting the second application; and
using the system default component switching animation or the customized component switching animation that corresponds to the second application in the process of switching between any two components in the second application.

12. The electronic device according to claim 11, wherein when the computer program is executed by the processor, the electronic device is further enabled to perform:
starting a fourth application; and
using a system default window switching animation in a process of switching from the second application to the fourth application.

13. The electronic device according to any one of claims 8 to 12, wherein when the computer program is executed by the processor, the electronic device is further enabled to perform:
if the starting scene of the first application does not match the preset scene, using the system default component switching animation or the customized component switching animation that corresponds to the first application in the process of switching between any two components in the first application; or
if it is determined that the starting scene of the second application does not match the preset scene, using the system default component switching animation or the customized component switching animation that corresponds to the second application; or
if it is determined that the starting scene of the third application does not match the preset scene, using the system default component switching animation or the customized component switching animation that corresponds to the third application.

14. The electronic device according to any one of claims 8 to 13, wherein when the computer program is executed by the processor, the electronic device is further enabled to perform:
if it is determined that the starting scene of the second application does not match the preset scene, using the system default window switching animation in the process of switching from the first application to the second application, and/or using the system default component switching animation or the customized component switching animation that corresponds to the second application in the process of switching between any two components in the second application; or
if it is determined that the starting scene of the third application does not match the preset scene, using the system default window switching animation in the process of switching from the first application to the third application, and/or, using the system default component switching animation or the customized component switching animation that corresponds to the third application in the process of switching between any two components in the third application.

15. A computer-readable storage medium, wherein the computer-readable storage medium comprises a computer program, and when the computer program is run on an electronic device, the electronic device is enabled to perform the method according to any one of claims 1 to 7.

16. A computer program product, wherein the computer program product comprises a computer program or instruction, and when the computer program or instruction is executed on a computer, the method according to any one of claims 1 to 7 is implemented.
